# DEMANDE DE BREVET EUROPEEN

(11) **EP 1 516 857 A1**
(43) Date de publication de la demande: **23.03.2005**
(21) Numéro de dépôt: 03360104.8
(22) Date de dépôt: 16.09.2003
(51) Int. Cl.: C02F 3/28, B01D 53/85, C02F 3/32

(54) **Procede et installation pour l'epuration d'effluents domestiques ou agro-industriels par digestion anaerobie**

(71) Demandeur: Centre de Recherche Mèze-Hérault-Ceremher, 34140 Mèze (FR); Christian Trallero SL, Figueras (Province de Girona) (ES)
(72) Inventeur: Bondon, Daniel, 34070 Montpellier (FR); Sambuco, Jean-Pierre, 34140 Meze (FR); Trallero, Christian, 34600 Herepian (FR)
(74) Mandataire: Rhein, Alain

(57) **Abrégé**

L'invention concerne un procédé pour l'épuration d'effluents domestiques ou agro-industriels consistant:
- en une première phase (A) de décantation pour l'élimination des particules inertes et grossières en vue de leur digestion anaérobie;
- une seconde phase (B) d'injection de l'effluent décanté sous un lit de boue (11) résultant de la croissance bactérienne liée à la dégradation anaérobie de la matière organique soluble contenue dans cet effluent;
- une troisième phase de finition (C) de type biologique;
- à traiter, au travers d'une structure filtrante, les émanations de gaz olfactifs (G) résultant au moins de la seconde phase (B).
L'invention concerne encore une installation pour la mise en oeuvre de ce procédé.

## Description

L'invention concerne un procédé et une installation pour l'épuration d'effluents domestiques ou agro-industriels par digestion anaérobie et par une finition de type biologique.

La présente invention concerne le domaine des procédés et installations pour l'épuration d'effluents tout particulièrement adaptés aux unités de petites tailles, tel que, par exemple, les caves particulières vinicoles ou autres unités agro-industrielles, tout comme les communautés de l'ordre de 200 à 1000 équivalents habitants, à population permanente, variable ou passagère. Par exemple, la présente invention trouvera son application pour le traitement des eaux usées de villages de vacances, campings, complexes sportifs et de loisirs, aires d'autoroute, etc....

Les procédés dits aérobies sont les plus communément mis en oeuvre pour le traitement de tels effluents. Cependant, ils conduisent à des volumes de boues à traiter qui sont bien plus importants en comparaison à une digestion de type anaérobie. Evidemment les installations pour la mise en oeuvre d'un procédé de traitement aérobie sont elles-mêmes plus onéreuses et plus complexes.

Il n'empêche que les traitements anaérobies d'effluents génèrent la production de bio-gaz chargé de composés olfactifs constituant une nuisance pour l'environnement.

Aussi, les installations mettant en oeuvre de tels procédés anaérobie comportent des réacteurs fermés permettant une récupération du méthane produit et sa valorisation énergétique.

Or, dans le cadre de traitements d'effluents de faible volume tels que ceux résultant d'une unité agro-industrielle de petite taille ou de communautés respectant les proportions indiquées plus haut, une telle valorisation s'avère économiquement non intéressante dans la mesure où la quantité de matière organique à dégrader n'est pas en mesure de fournir suffisamment de gaz justifiant les moyens à mettre en oeuvre pour sa récupération.

Quelles soient de type aérobie ou anaérobie, les installations actuellement mises en oeuvre posent, en outre, le problème de leur intégration dans le milieu naturel.

En fin de compte, la présente invention a pour but de proposer un procédé de traitement anaérobie qui, appliqué à des effluents agro-industriels provenant d'unités de petite taille ou encore de type domestique et issus de communautés de l'ordre de 200 à 1000 équivalent-habitants, s'avère d'une particulière efficacité, non seulement du point de vue du rendement qu'il procure, mais également par rapport à la quantité de boue produite, sans compter que les infrastructures correspondant aux installations pour la mise en oeuvre de ce procédé s'avèrent, elles, d'encombrement réduit, mais, en outre, peuvent s'intégrer parfaitement dans le milieu naturel sans risque de nuisance qu'il soit de type olfactif ou visuel.

Ainsi, l'invention concerne un procédé pour l'épuration d'effluents domestiques ou agro-industriels consistant :
. en une première phase de décantation pour l'élimination des particules inertes et grossières en vue de leur digestion anaérobie ;
. une seconde phase d'injection de l'effluent décanté sous un lit de boue actif résultant de la croissance bactérienne liée à la dégradation anaérobie de la matière organique soluble contenue dans cet effluent ;
. une troisième phase de finition de type biologique
. et à traiter au travers d'une structure filtrante les émanations de gaz olfactifs résultant au moins de la seconde phase.

Quant à l'installation pour la mise en oeuvre de ce procédé elle comporte :
. au moins un premier décanteur pour la suppression des boues primaires ;
. un réacteur de digestion UASB (pour Upflow Anaerobic Sludge Blanket) comportant des moyens d'injection sous un lit de boue actif et à vitesse ascensionnelle contrôlée des effluents issus du décanteur ;
. et une unité de finition biologique;
. le réacteur UASB comportant une couverture filtrante biologique et/ou synthétique, pour le traitement des émanations de gaz olfactifs.

Selon une particularité de la présente invention, le décanteur peut, lui aussi, comporter une telle couverture biologique.

D'autres buts et avantages de la présente invention apparaîtront au cours de la description qui va suivre se rapportant à des exemples de réalisation.

La compréhension de cette description sera facilitée en se référant aux dessins ci-joints dans lesquels :
- la figure 1 est un organigramme du procédé selon l'invention
- la figure 2 illustre, de manière schématisée et en partie, une installation pour la mise en oeuvre du procédé selon l'invention, étant illustré le décanteur et le réacteur UASB ;
- la figure 3 est une vue similaire à la figure 1 illustrant un second mode de réalisation de l'ensemble décanteur, réacteur UASB, cet ensemble étant ici précédé d'une unité de dégrillage.
- la figure 4 est une représentation schématisée d'une lagune à haut rendement algal;
- la figure 5 est une représentation schématisée d'une lagune profonde à court temps de séjour;
- la figure 6 est une représentation schématisée d'une lagune de finition classique;
- la figure 7 est une représentation schématisée d'une lagune cloisonnée;
- la figure 8 est une représentation schématisée d'une lagune de finition ombrée;
- La figure 9 est une représentation schématisée d'un filtre horizontal planté équipé de moyens de recirculation;
- La figure 10 est une représentation schématisée de deux filtres horizontaux plantés équipés d'un système de vidange et de remplissage;
- la figure 11 est une représentation schématisée d'un filtre vertical planté notamment pour le traitement des boues primaires.

Ainsi, l'invention concerne un procédé et une installation 1 pour l'épuration d'effluents domestiques et/ou agro-industriels.

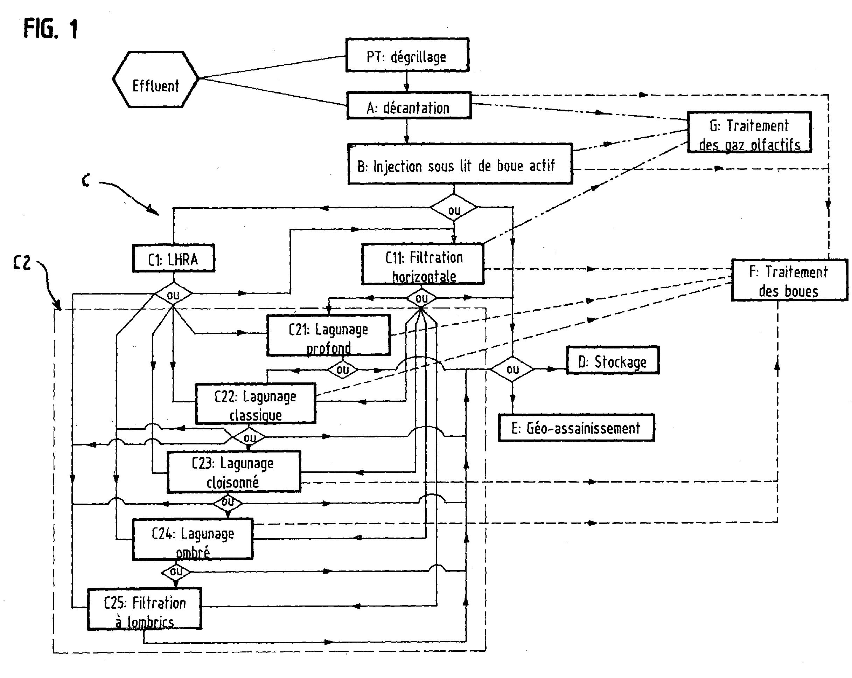

Le procédé, représenté sous forme d'un organigramme dans la figure 1, consiste, éventuellement après un prétraitement de type dégrillage PT, en une première phase A de décantation destinée à rendre l'effluent compatible avec la suite de la filière de traitement. Cette décantation A, préférentiellement en ambiance anaérobie, a pour but d'éliminer les particules inertes et grossières. Les boues récoltées au travers de cette décantation sont dites les boues primaires.

A noter qu'au cours de cette phase A, il est également retenu une part de la pollution organique qui subit une dégradation anaérobie libérant des métabolites qui seront digérées dans les phases suivantes.

Justement, dans une seconde phase B l'effluent issu de cette décantation est injecté sous un lit de boue actif résultant de la croissance bactérienne liée à la dégradation anaérobie de la matière organique soluble contenue dans cet effluent.

L'effluent peut, alors, être revalorisé directement, notamment par géo-assainissement par infiltration et évapotranspiration E, s'il est atteint un niveau de dépollution suffisant.

En fait, il est plus particulièrement prévu de soumettre à cet effluent à une troisième phase de traitement C, consistant en une finition de type biologique.

Une telle unité de finition biologique peut emprunter différentes formes de réalisation.

En particulier, elle peut être définie par un lagunage à haut rendement algal C1. Ce type de lagunage C1 permet de diminuer de manière sensible la matière carbonée et les sels nutritifs contenus dans ces effluents, ceci pour un temps de séjour compris entre 3 et 15 jours.

Evidemment, il est producteur de biomasse phytoplanctonique que l'on peut ensuite éliminer par un traitement de finition C2, tel qu'un lagunage profond à court de temps de séjour C21 et/ou un lagunage de type classique C22 et/ou cloisonné C23 et/ou un lagunage ombré C24 et/ou une filtration par lombrics C25.

Cette finition biologique C peut encore être définie, par une filtration horizontale C11 sous forme d'un lit de graviers planté de macrophytes que vient traverser l'effluent issu de la seconde phase B, sachant qu'une telle filtration horizontale C11 peut encore être réalisée en aval du lagunage à haut rendement algal C1.

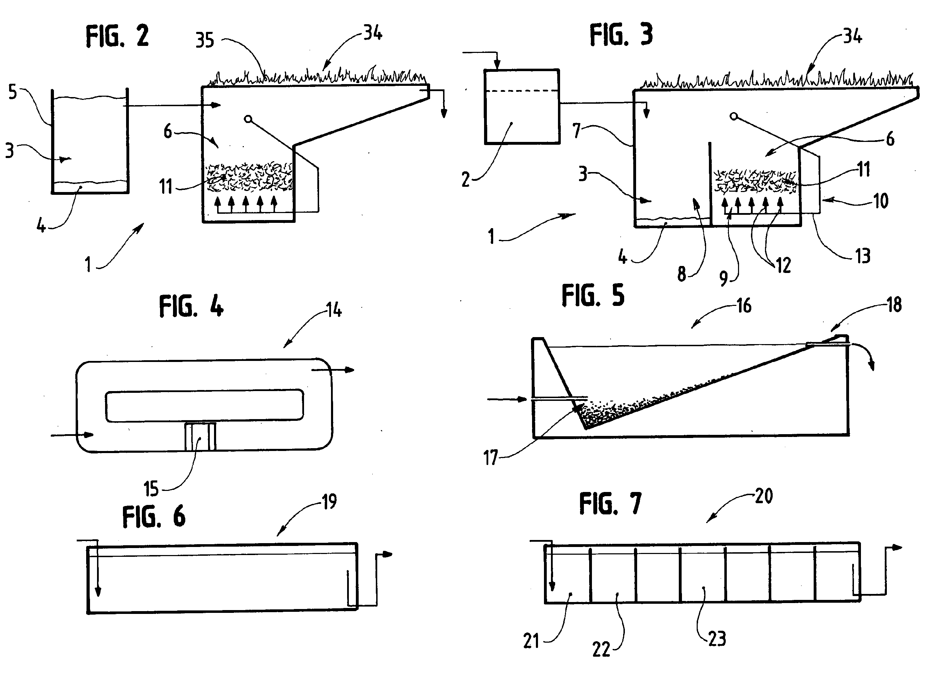

Comme visible dans les figures 2 et 3, l'installation 1 permettant la mise en oeuvre de ce procédé, comporte, éventuellement en aval d'une unité de dégrillage 2, un décanteur 3 pour l'élimination des boues primaires 4. Ce décanteur 3 peut se présenter sous forme d'une cuve indépendante 5, comme illustré dans la figure 2, ou associé au réacteur UASB 6. Dans ce cas et comme cela est illustré dans la figure 3, on dispose d'une seule et même cuve 7 subdivisée en deux compartiments 8, 9 dont l'un définit le décanteur 3 et l'autre ce réacteur UASB 6.

A ce propos, celui-ci, récupérant l'effluent en provenance du décanteur 3, est équipé de moyens 10 permettant de prélever cet effluent depuis sa partie supérieure pour l'injecter sous un lit de boue active 11 permettant la dégradation de la matière organique.

Les bases de dimensionnement de ce réacteur 6 sont calculées, selon le cas, partant de la charge lorsque celle-ci est importante, par exemple dans le cas d'effluents agroalimentaires, soit à partir des temps de séjours dans le cas d'effluents faiblement chargés, tels que des effluents urbains. Tout particulièrement, ce réacteur est dimensionné pour que sa charge en DCO soit comprise entre 4 et 12 kg par m³ pour un effluent fortement chargé et/ou à même de satisfaire à un temps de séjour de 6 à 18 heures pour un effluent peu chargé.

Les moyens d'injection 10 comportent en fond de réacteur plusieurs rampes d'injection 12 raccordées à une conduite d'alimentation 13 prélevant l'effluent en partie supérieure. De plus, il leur est associé des moyens de contrôle du flux d'effluent injecté dans le but de maintenir le lit de boue 11 en expansion, tenant compte qu'il est recherché une vitesse ascensionnelle habituellement comprise entre 0,5 et 0,9 m/h.

La cuve 7 définissant, selon le cas, soit exclusivement le réacteur UASB 6, soit, en combinaison, ce dernier et le décanteur 3, se présente avantageusement sous forme d'une fosse enterrée.

Quant au lagunage à haut rendement algal C1, il consiste, comme visible dans la figure 4, en une lagune 14 sous forme d'un chenal de profondeur comprise entre 0,2 à 0,8 mètres et décrivant un circuit fermé. Les effluents sortant du réacteur de digestion UASB 6 y sont injectés et mis en circulation par l'intermédiaire de moyens de brassage 15, tels qu'une roue à aube ou tout autre moyen de propulsion approprié, ceci à une vitesse d'écoulement moyenne d'environ 15 cm/s.

Il est représenté dans la figure 5, une lagune profonde 16 à court temps de séjour sous forme d'un bassin, dans lequel est introduit, en amont et en profondeur 17, l'effluent sortant du lagunage à haut rendement algal C1. Cet effluent s'achemine, ensuite au travers d'un écoulement ascendant, en direction de la sortie située en partie avale 18 de cette lagune 16.

De bons rendements ont pu être obtenus pour une lagune 16 dont le rapport longueur sur largeur était de l'ordre de six pour une profondeur d'environ deux mètres. Tout particulièrement dans ce cas, la fréquence entre chaque curage de la lagune pour éliminer les bouts venant stagner au fond est estimée sensiblement à six mois.

Comme déjà indiqué ci-dessus, les effluents sortant de ce lagunage profond C21 peuvent subir un lagunage de finition classique C22 qui consiste, comme représenté dans la figure 6, à les injecter dans un bassin 19 d'une profondeur environ 1m à 1m50, dimensionné pour un temps de séjour de l'ordre de 20 jours.

Comparativement, le lagunage cloisonné C23 consiste à utiliser une lagune 20 de type classique (voir figure 7) qui, entre sa partie amont où est injecté l'effluent à traiter et la partie avale dont ils sont évacués après traitement, est compartimentée de manière à définir des cellules 21, 22, 23..., d'un temps de séjour maximum de trois jours. A noter que, là encore, une telle lagune de finition cloisonnée 20 est définie pour un temps de séjour total des effluents de l'ordre de 20 jours.

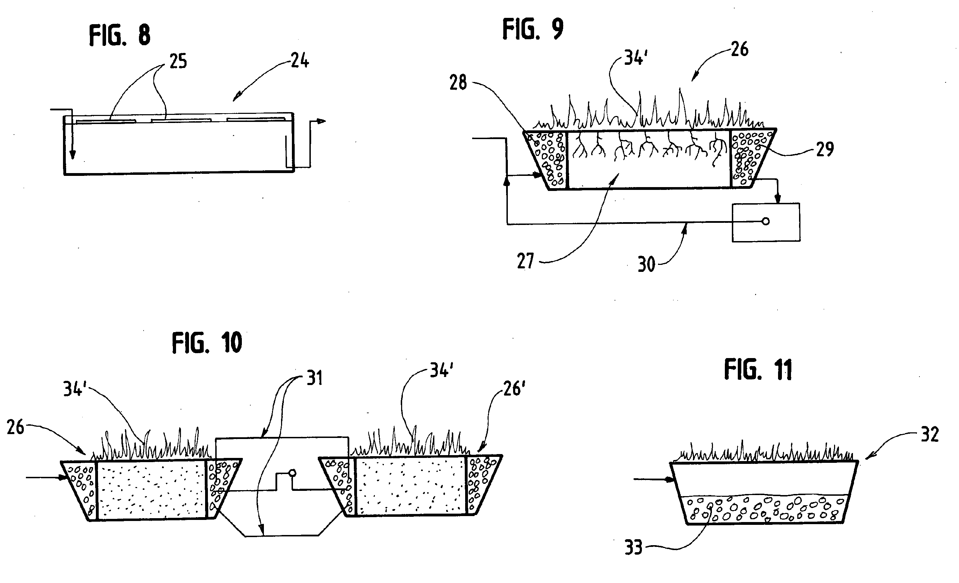

De même, un lagunage de finition ombré C24 consiste, en comparaison à un lagunage classique et comme visible dans la figure 8, à couvrir la lagune 24 au moins en partie par l'intermédiaire d'une couverture opaque 25 pour éviter le développement algal.

Dans la figure 9, il est illustré un filtre horizontal 26 constitué d'un tel lit de graviers planté de macrophytes 27 que peut traverser l'effluent sortant du réacteur UASB 6 ou d'une lagune à haut rendement algal 14, en vue d'une épuration plus avancée.

Ce filtre horizontal 26 comporte une zone d'admission 28 de l'effluent et une zone d'évacuation 29, ces zones 28, 29 étant constituées en bloc rocheux grossier. Entre ces derniers le filtre 26 comporte une masse filtrante réalisée en gravier de petite et moyenne dimension constituant, par conséquent, le lit 27.

Pour une meilleure efficacité, il peut encore être associé à ce filtre 26 des moyens de recirculation 30 permettant de prélever une partie de l'effluent en sortie du filtre 26, donc provenant de la zone d'évacuation 29 pour la réinjecter au niveau de la zone d'admission 28.

Pour une épuration plus poussée, cette filtration horizontale C11 peut être assurée au travers de plusieurs de ces filtres horizontaux 26, 26', comme visible dans la figure 10. L'installation peut alors être pourvue d'un système interne de vidange et de remplissage 31 tel que puisard et pompe, permettant par marnage d'obtenir des conditions d'aération du milieu nécessaire à une épuration poussée.

Finalement, l'effluent en sortie de l'unité de finition biologique peut être stocké D de différentes manières en vue de sa valorisation par irrigation des cultures. En particulier elle peut servir à approvisionner des plans d'eau paysagés, sachant que ce stockage D peut encore se faire souterrain au travers de retenues d'eau artificielles. Celles-ci sont constituées, par exemple, au moyen d'un liner délimitant un volume enterré étanche rempli de matériaux à faible densité pour une contenance en eau maximale. On peut, en particulier, utiliser des matériaux recyclés tels que plastiques, caoutchouc, pneumatiques ou encore un mélange de fibres actives et structurantes.

Par ailleurs, par un procédé de géo-assainissement par infiltration et évapotranspiration E, les eaux traitées peuvent être évaporées par des végétaux supérieurs et contribuer à l'alimentation de nappes superficielles.

Le procédé selon l'invention comporte encore une phase de traitement des boues F. Peuvent être concernées les boues primaires 4 extraites de la décantation, les boues secondaires sortant du réacteur UASB 6, tout comme celles recueillies au travers de l'unité de finition biologique, c'est dire sortant de l'un quelconque des filtres 24,26, 26' ou d'une lagune 14, 16, 19, 20.

Cette phase de traitement F consiste en une filtration sur un filtre vertical planté 32, plus particulièrement représenté dans la figure 11. Finalement, ce filtre vertical 32 réalisé en gravier, est pourvu d'un drain 33 de récupération des eaux, lesquelles peuvent être recyclées dans le cadre de la filtration biologique C.

Un tel filtre vertical 32 peut également recevoir les produits de focardage broyé. Le développement d'une faune et d'une flore détritivores permet l'apparition d'un composte valorisable

il convient d'observer que, conformément au procédé selon l'invention, il est prévu le traitement G des émanations de gaz olfactifs résultant des différentes phases et en particulier de la seconde B, voire également de la décantation A. Ce traitement est assuré au travers d'une couverture biologique et/ou synthétique filtrante 34 surmontant la cuve 7 du réacteur UASB 6.

Cette couverture 34 est définie sous forme d'une structure filtrante permettant de bloquer et oxyder les composés à l'origine d'une nuisance olfactive. Préférentiellement, cette structure filtrante est constituée à base de tourbe, de composés de fer et de végétaux plantés 35. Cependant, d'autres matériaux inertes ou biologiques peuvent être utilisés, tels que le compost, des déchets végétaux, des matières plastiques... A noter, encore, que cette couverture filtrante biologique et/ou synthétique 34 peut être flottante ou fixe en fonction de la taille et de la forme de l'ouvrage, en l'occurrence de la cuve 7.

En outre, elle peut s'étendre largement au-dessus de cette dernière de manière à procurer un volume d'échange suffisant pour le traitement de ces gaz olfactifs.

Les végétaux préférentiellement plantés sur ces structures filtrantes sont des végétaux de zones humides dont on a d'ores et déjà pu expérimenter leur efficacité en matière d'oxydation des composés olfactifs d'un gaz biologique provenant d'une digestion anaérobie.

Un tel traitement G des émanations de gaz olfactifs peut également être assuré au niveau de la filtration horizontale C11. En fait, il s'agit, là encore, de recouvrir le ou les filtres horizontaux 26, 26' d'une couverture biologique filtrante 34'.

Tout particulièrement, sur leur lit de graviers 27 peuvent être plantés des roseaux.

Dans le cadre d'épuration d'effluents provenant d'activités agro-industrielles en zone urbaine ou péri-urbaine, il peut être envisagé de ne faire subir à ces effluents que les deux premières phases de traitement anaérobie, c'est à dire la phase de décantation A et de digestion sur lit de boue active B, de manière à les rendre compatibles avec les systèmes d'assainissement urbains.

Finalement, l'on constate que le procédé selon l'invention et l'installation pour sa mise en oeuvre permettent la valorisation des eaux et des composts résultant des effluents traités, ainsi qu'une intégration paysagère valorisante pour le maître d'ouvrage. De plus, étant donné la faible demande en énergie, l'alimentation électromécanique pourra être assurée grâce à la mise en oeuvre d'énergie renouvelable permettant l'installation dans des écarts et des économies significatives.

## Revendications

1. Procédé pour l'épuration d'effluents domestiques ou agro-industriels consistant :
- en une première phase (A) de décantation pour l'élimination des particules inertes et grossières en vue de leur digestion anaérobie ;
- une seconde phase (B) d'injection de l'effluent décanté sous un lit de boue actif (11) résultant de la croissance bactérienne liée à la dégradation anaérobie de la matière organique soluble contenue dans cet effluent ;
- une troisième phase de finition (C) de type biologique ;
- à traiter, au travers d'une structure filtrante, les émanations de gaz olfactifs (G) résultant au moins de la seconde phase (B).

2. Procédé selon la revendication 1, **caractérisé par le fait que** l'on procède à un pré-traitement de l'effluent de type dégrillage (PT) préalablement à la phase (A) de décantation.

3. Procédé selon l'une quelconque des revendications précédentes, **caractérisé par le fait que** la finition biologique est définie par un lagunage à haut rendement algal (C1) et/ou une filtration horizontale (C11) sur lit de graviers planté de macrophyte.

4. Procédé selon la revendication 3, **caractérisé par le fait qu'**en sortie de lagunage à haut rendement algal (C1) ou de filtration horizontale (C11), il est appliqué à l'effluent un traitement de finition (C2) tel qu'un lagunage profond à court temps de séjour (C21) et/ou un lagunage de type classique (C22) et/ou cloisonné (C23) et/ou un lagunage ombré (C24) et/ou une filtration par lombrics (C25).

5. Procédé selon l'une quelconque des revendications précédentes, **caractérisé par le fait qu'**en fait qu'en sortie de finition biologique (C) l'effluent est stocké (D) et/ou et traité par géo-assainissement par infiltration et évapotranspiration (E).

6. Procédé selon l'une quelconque des revendications précédentes, **caractérisé par le fait qu'**il comporte une phase de traitement des boues (F), en particulier des boues primaires (4) extraites de la décantation (A), des boues secondaires issues de la phase (B) et celles résultant de la finition biologique (C).

7. Installation pour la mise en oeuvre du procédé selon l'une quelconque des revendications précédentes, **caractérisée par le fait qu'**elle comporte :
. au moins un premier décanteur (3) pour la suppression des boues primaires (4) ;
. un réacteur de digestion UASB (6) récupérant les effluents provenant du décanteur (3) et comportant des moyens d'injection (10) permettant de prélever cet effluent depuis la partie supérieure de ce réacteur (6) pour l'injecter sous un lit de boues actif (11) à une vitesse ascensionnelle contrôlée.
. et au moins une unité de finition biologique (14 ; 16 ; 19 ; 20 ; 24 ; 26 ; 26')
. le réacteur UASB (6) comportant une couverture filtrante biologique et/ou synthétique (34), de type structure filtrante, pour le traitement des émanations des gaz olfactifs.

8. Installation selon la revendication 7, **caractérisée par le fait que** le décanteur (3) présente une couverture filtrante biologique et/ou synthétique (34) de type structure filtrante.

9. Installation selon la revendication 7 ou 8, **caractérisée par le fait que** le réacteur UASB (6) se présente sous forme d'une fosse enterrée surmontée de la couverture filtrante biologique et/ou synthétique (34) de type flottante ou fixe.

10. Installation selon l'une quelconque des revendications 7 à 9, **caractérisée par le fait que** le décanteur (3) et le réacteur UASB (6) sont définis par une seule et même cuve (7) subdivisée en deux compartiments (8, 9).

11. Installation selon l'une quelconque des revendications 7 à 10, **caractérisée par le fait que** l'unité de finition biologique comporte une lagune à haut rendement algal (14) sous forme d'un chenal de profondeur comprise entre 0,2 et 0,8 et décrivant un circuit fermé et comportant des moyens de brassage (15) pour la mise en circulation de l'effluent, notamment à une vitesse d'écoulement d'environ 15cm/s.

12. Installation selon l'une quelconque des revendications 7 à 11, **caractérisée par le fait que** l'unité de finition biologique comporte en tant que traitement de finition au moins une lagune profonde (16) à court temps de séjour et/ou une lagune classique (19) et/ou une lagune cloisonnée (20) sous forme de compartiments (21, 22, 23) et/ou une lagune ombrée (25) et/ou un filtre à lambris.

13. Installation selon l'une quelconque des revendications 7 à 12, **caractérisée par le fait que** l'unité de finition biologique comporte au moins un filtre horizontal (26, 26') constitué d'un lit de graviers planté de macrophytes (27) susceptible d'être traversé par l'effluent depuis une zone d'admission (28) jusqu'à une zone d'évacuation (29).

14. Installation selon la revendication 13, **caractérisé par le fait qu'**un filtre horizontal (26) comporte des moyens de recirculation (30) permettant de prélever une partie de l'effluent en sortie du filtre (26), au niveau de la zone d'évacuation (29), pour la réinjecter au niveau de la zone d'admission (28).

15. Installation selon la revendication 13, **caractérisée par le fait que** l'unité de finition biologique comporte deux filtres horizontaux (26, 26') équipés d'un système interne de vidange et de remplissage (31) en vue d'obtenir, par marnage, les conditions d'aération du milieu nécessaire à une épuration poussée.

16. Installation selon l'une quelconque des revendications 13 à 15, **caractérisée par le fait que** le ou les filtres horizontaux (26, 26') sont recouverts d'une couverture filtrante biologique et/ou synthétique (34'), notamment sous forme de roseaux.

17. Installation selon l'une quelconque des revendications 7 à 16, **caractérisée par le fait qu'**il comporte, pour le traitement des boues, un filtre vertical planté (32) comportant un drain (33) de récupérations des eaux.
